# EUROPÄISCHE PATENTSCHRIFT

(11) **EP 1 097 323 B1**
(45) Veröffentlichungstag und Bekanntmachung des Hinweises auf die Patenterteilung: **17.11.2004**
(21) Anmeldenummer: 99938311.0
(22) Anmeldetag: 21.07.1999
(51) Int. Cl.: F16J 15/14

(54) **VERFAHREN ZUM HERSTELLEN EINER ABDICHTUNG ZWISCHEN ZWEI MASCHINENTEILEN, INSBESONDERE EINEM MOTORBLOCK UND EINEM ZYLINDERKOPF**
METHOD FOR PRODUCING A SEALING BETWEEN TWO ENGINE PARTS, ESPECIALLY BETWEEN AN ENGINE BLOCK AND A CYLINDER HEAD
PROCEDE DE PRODUCTION D'UN JOINT D'ETANCHEITE ENTRE DEUX ELEMENTS DE MACHINE, NOTAMMENT UN BLOC MOTEUR ET UNE CULASSE

(30) Priorität: 21.07.1998 DE 19832788
(43) Veröffentlichungstag der Anmeldung: 09.05.2001
(73) Patentinhaber: Henkel Loctite Deutschland GmbH, 81925 München (DE)
(72) Erfinder: SCHMATZ, Thomas, Martin, D-80997 München (DE)
(74) Vertreter: Gritschneder, Martin, Dipl.-Phys.
(86) Internationale Anmeldenummer: PCT/EP1999/005211
(87) Internationale Veröffentlichungsnummer: WO 2000/005522

(56) Entgegenhaltungen:
- GB-A- 2 041 492
- GB-A- 2 189 253
- US-A- 5 727 791

## Beschreibung

Die Erfindung betrifft ein Verfahren zum Herstellen einer Abdichtung zwischen zwei Maschinenteilen, die zusammen einen Raum umschließen, in dem zumindest zeitweise hoher Druck und/oder hohe Temperatur herrschen. Eine aushärtbare Zusammensetzung wird als Abdichtmittel unmittelbar auf ein oder auf beide Maschinenteile zumindest in den Bereichen aufgetragen, die nicht unmittelbar an den Raum angrenzenden, in dem zumindest zeitweise hoher Druck und/oder hohe Temperatur herrscht, und die beiden Maschinenteile werden vor dem Aushärten der Zusammensetzung verbaut.

Die Erfindung betrifft ferner eine Anordnung von zwei miteinander verbundenen Maschinenteilen mit einer Abdichtung dazwischen, sowie einen Kolbenmotor mit einem Motorblock und einem Zylinderkopf und mit einer dazwischen angeordneten Abdichtung.

Zum Abdichten des Zylinderkopfes wird üblicherweise eine Feststoffdichtung zwischen dem Motorblock und dem Zylinderkopf eingelegt. Die Feststoffdichtung bedeckt die gesamte Dichtfläche zwischen Motorblock und Zylinderkopf. Im Bereich der Brennräume, der Kühlwasserkanäle, der Zylinderkopfschrauben usw. sind Öffnungen in der Zylinderkopfdichtung vorgesehen. Die Ränder der Öffnungen für die Brennräume sind durch Metalleinlagen verstärkt. Die übrigen Öffnungen können Ringe aus Silikonraupen aufweisen, um die Abdichtung an diesen Stellen zu gewährleisten. Die Kosten komplizierter Zylinderkopfdichtungen, wie sie heute im Einsatz sind, um den Qualitätsstandard zu erreichen, stehen in keinem Verhältnis verglichen mit anderen Dichtlösungen.

Aus GB-A-2 189 253 ist ein Verfahren der eingangs genannten Art bekannt, bei dem nur eine aushärtbare Zusammensetzung, die im Ruhezustand nicht-fluid ist, als Abdichtmittel eingesetzt wird.

Aus DE-A-2 203 485 ist es bekannt, einen Dichtring zwischen zwei Flanschen dadurch in-situ zu bilden, daß zwischen den Flanschen ein festes, formbares Polyacrylatpolymer-Dichtmittel eingegeben wird, das zu einem Elastomer wärmeaushärtbar ist, daß dann die Flansche aufeinandergepreßt werden, um einen vollständigen Kontakt zwischen dem Dichtmittel und den Dichtflächen der Flansche zu erzielen, und daß schließlich die Anordnung erwärmt wird, um das Dichtmittel in die elastomere Form überzuführen.

Aus US-A-5,116,558 und DE-A-196 32 275 ist ein Dichtungs- und Klebeverfahren für Bauteilverbindungen bekannt, insbesondere ein Verfahren zum Abdichten und Verkleben von Metall-Bauteilen in der Fahrzeug- und Motorentechnik. In wenigstens einer der Fügeflächen wird mindestens eine Nut mit einer Befüllungsöffnung vorgesehen. Die Bauteile werden an ihren Fügeflächen in der gewünschten Orientierung zusammengefügt und eine Dichtoder Klebemasse wird dann durch die Befüllungsöffnung eingefüllt, bis die Nut vollständig gefüllt ist.

Aus DE-A-44 39 186 ist eine elastomere Silikon-Dichtung bekannt, wobei das Silikon in unvernetztem Zustand auf den Gehäusedeckel aufgebracht wird und dann eine vorgegebene Zeit zum teilweise Vernetzen des Silikons abgewartet wird, bevor es mittels eines Prägewerkzeugs in die gewünschte Form gebracht wird. Anschließend läßt man das Silikon vollständig vernetzen.

Aus DE-C1-37 40 033 ist es bekannt, an der dem Steuergehäusedeckel zugewandten Stirnseite einer Feststoff-Zylinderkopfdichtung ein fließfähiges Abdichtmittel vorzusehen. Das Abdichtmittel wird bei der Montage gegen die Dichtnasen einer Profildichtung gepreßt, die zwischen dem zylinderkopfseitigen und dem kurbelgehäuseseitigen Deckelteil des Steuergehäusedeckels vorgesehen ist.

Es ist ferner bekannt, in flüssiger Form auftragbare, aushärtbare Zusammensetzung zum Abdichten von Getriebegehäuseabdekkungen und Ölwannendeckeln zu verwenden. Innerhalb derartiger Abdeckungen treten jedoch nur relativ niedrige Temperaturen und niedrige Drücke auf.

Der Erfindung liegt die Aufgabe zugrunde, das Herstellen einer Abdichtung zwischen zwei Maschinenteilen zu vereinfachen, die einen Raum umschließen, in dem relativ hohe Drücke und/oder Temperaturen herrschen.

Erfindungsgemäß wird diese Aufgabe dadurch gelöst, dass die aushärtbare Zusammensetzung in flüssiger Form auf ein oder auf beide Maschinenteile aufgetragen wird, dass unmittelbar um den Rand des Raums hohen Drucks und/oder hoher Temperatur ein Dichtungsring zwischen die beiden Maschinenteile eingebaut wird, oder dass die Dichtfläche am Rand des Raumes leicht erhöht ist gegenüber der restlichen Dichtfläche und die aushärtbare Zusammensetzung auf die gesamte Dichtfläche beider Maschinenteile aufgetragen wird, und dass außerhalb der Bereiche, die unmittelbar an den Raum angrenzen, die aushärtbare Zusammensetzung zur Abdichtung eingesetzt wird.

Erfindungsgemäß wird also die Feststoffdichtung zumindest teilweise durch eine chemische Flüssigdichtung ersetzt.

Gegenstand der Erfindung ist ferner eine Anordnung von zwei miteinander verbundenen Maschinenteilen mit einer Abdichtung dazwischen nach Anspruch 6, wobei die Abdichtung nach dem erfindungsgemäßen Verfahren hergestellt ist. Gegenstand der Erfindung sind ferner Kolbenmotore mit einem Motorblock, der einen Brennraum enthält, einem Zylinderkopf und mit einer dazwischen angeordneten Abdichtung, nach den Ansprüchen 7 und 8.

Da die aushärtbare Zusammensetzung vor dem Aushärten verbaut wird, ist sie ein sogenanntes FIP(=formed in place)-Produkt. Im Gegensatz dazu würde ein sogenanntes CIP(=cured in place)-Produkt erst nach dem Aushärten verbaut.

Die aushärtbare Zusammensetzung wird unmittelbar auf die Dichtfläche eines oder beider Maschinenteile aufgetragen. Das Auftragen der aushärtbaren Zusammensetzung lässt sich vollständig automatisieren, wodurch sich Einsparungen nicht nur durch den Wegfall der Feststoffdichtung sondern auch durch die einfachere Montage ergeben. Ein besonderer Vorteil besteht darin, daß der Auftrag der aushärtbaren Zusammensetzung so dünn sein kann, daß zwischen Motorblock und Zylinderkopf ein Metall-Metall-Kontakt und damit ein besonders guter Wärmeübergang besteht. Durch den Metall-Metall-Kontakt ist auch ein Setzen der Dichtung ausgeschlossen.

Durch die Verwendung eines FIP-Produktes können die abzudichtenden Flächen größere Toleranzen als bei Feststoffdichtungen aufweisen, da die Abdichtung im wesentlichen durch Adhäsion und nicht durch Flächenpressung erzielt wird. Das FIP-Produkt dichtet nicht nur ab, sondern klebt die abzudichtenden Flächen zusammen.

In einer bevorzugten Ausführungsform werden die Räume oder Kammern hohen Drucks und/oder hoher Temperatur durch Dichtungsringe abgedichtet, wozu die Dichtungsfläche im Bereich deren Ränder vertieft sein kann, so daß sie den Dichtungsring aufnimmt. Die Vertiefung ist dabei so bemessen, daß der Dichtungsring im verbauten Zustand ausreichend zusammengepreßt wird.

In einer anderen bevorzugten Ausführungsform ist der Dichtungsring in Kunststoff eingebunden oder auf der Innenund/oder Außenseite von einem Kunststoffring umgeben.

In einer besonders bevorzugten Ausgestaltung der Erfindung wird die gesamten Dichtfläche der beiden Maschinenteile mittels der aushärtbaren Zusammensetzung abgedichtet. Gegebenenfalls kann die Dichtfläche um den Raum oder die Kammer herum leicht erhöht sein, so daß bereits durch die erhöhte Flächenpressung in diesem Bereich eine bessere Abdichtung erreicht wird. Die Flächenpressung beträgt dabei vorzugsweise mindestens 2,5 MPa. Die Flächenpressung muß so hoch sein, daß bei den Drücken und Temperaturen, die im Betrieb in dem von den Maschinenteilen umschlossenen Raum auftreten, die Abdichtung gewährleistet ist. Im Einzelfall kann die Flächenpressung wesentlich höher als 2,5 MPa sein und muß manchmal in Abhängigkeit von der Motorauslegung wesentlich höher sein. Im Gegensatz zu Feststoffdichtungen, für die der Maximalwert bei etwa 300 MPa liegt, besteht bei der erfindungsgemäßen Abdichtung kein solcher Maximalwert. Im Rahmen der Druckfestigkeit des Material der beteiligten Maschinenteile kann die Flächenpressung beliebig hoch sein.

Bei größeren Flanschen und damit größeren Flanschflächen, insbesondere bei mehrzylindrigen Motoren, kann es wegen der unterschiedlichen Erwärmung oder einem unterschiedlichen Wärmeausdehnungskoeffizienten der Bauteile zu Relativbewegungen der beiden Dichtflächen zueinander kommen. Eine Zerstörung des Abdichtmittels und eine damit einhergehende Leckage kann hier durch einen dickeren Dichtmittelfilm, durch den das Dichtmittel dieser Bewegung folgen kann, verhindert werden. Um auch in einem solchen Fall einen Metall-Metall-Kontakt zu gewährleisten, wird an den Innen- und/oder Außenkanten der Dichtfläche eine Fase oder eine Ausnehmung vorgesehen. Im Bereich dieser Fase oder Ausnehmung kann der dickere Dichtmittelfilm auch dann erzielt werden, wenn ansonsten im wesentlichen Metall-Metall-Kontakt vorliegt. Die Fase oder Ausnehmung ist in der Regel lediglich auf einer Flanschseite auszuführen, wobei auf eine ausreichende Überdeckung der beiden Flanschflächen zu achten ist. Im Bereich der Fase oder Ausnehmung kann sich ein Dichtmittelfilm aufbauen. Die Dicke des Dichtfilmes ist entsprechend der Elastizität des verwendeten Dichtmittels und er vorhandenen Relativbewegung der Flanschflächen zueinander so auszulegen, daß über die gesamte Lebensdauer der Baugruppe keine Zerstörung des Dichtmittels auftritt. In der Regel ist eine minimale Schichtdicke von 0,8 mm ausreichend. Die Fase oder Ausnehmung kann sich je nach Anwendungsfall über den gesamten Bereich oder auch nur über Teilbereiche des Flansches erstrecken. Für bestimmte Anwendungen kann es aufgrund der geometrischen Verhältnisse der Flanschfläche auch nötig sein anstelle der Fase oder Ausnehmung eine Nut oder Nut/Schräge anzuordnen. Die Fase, Ausnehmung, Nut oder Nut/Schräge kann zur Kosteneinsparung bereits im Gußteil eingebracht sein.

Durch die beschriebenen geometrischen Veränderungen des Flansches (Fase, Aussparung, Nut) wird bei richtiger Dimensionierung sowie einer ausreichend genauen Dosierung des Dichtmittels ein Austritt des überschüssigen Dichtmittels nach innen oder außen vermieden. Ein Dichtmittelaustritt z.B. in den Brennraum kann somit vermieden werden. Bei einem unkontrollierten Dichtmittelaustritt kann es zur Beschädigung der Baugruppe oder anschließender Aggregate während des Betriebes kommen.

Die aushärtbare Zusammensetzung ist vorzugsweise ein Klebstoff auf Acryl- oder Silikonbasis, z.B. Loctite 5920, Loctite 5699 oder 5999, Loctite 5900 oder Loctite 5970. Es sind jedoch auch andere chemische Zusammensetzungen denkbar. Vorzugsweise wird eine aushärtbare Zusammensetzung oder ein solches Dichtmittel verwendet, die bei Temperaturen von über 180°C einsetzbar sind.

Das erfindungsgemäße Verfahren eignet sich insbesondere zum Herstellen einer Abdichtung zwischen dem Motorblock und dem Zylinderkopf eines Verbrennungsmotors, ist jedoch auch zur Herstellung von Flanschdichtungen bei Gasturbinen und ähnlichen Maschinen geeignet.

Ausführungsbeispiele der Erfindung werden nachfolgend anhand der Zeichnung erläutert: Es zeigen:
- Fig. 1: in Draufsicht einen offenen Motorblock;
- Fig. 2: einen Detailschnitt entlang der Zylinderachse in Motorlängsrichtung;
- Fig. 3: im Schnitt einen nach beiden Seiten von einem Kunststoffring umgebenen Dichtungsring, angeordnet am Rand der Zylinderbohrung eines Motorblocks;
- Fig. 4: im Schnitt die Abdichtung zwischen einem Zylinderkopf und einem Motorblock;
- Fig. 5 bis 8: im Schnitt die Abdichtung zwischen zwei Maschinenteilen, wobei in einer der Dichtfächen eine Fase, Ausnehmung, gerade Nut bzw. schräge Nut ausgebildet ist.

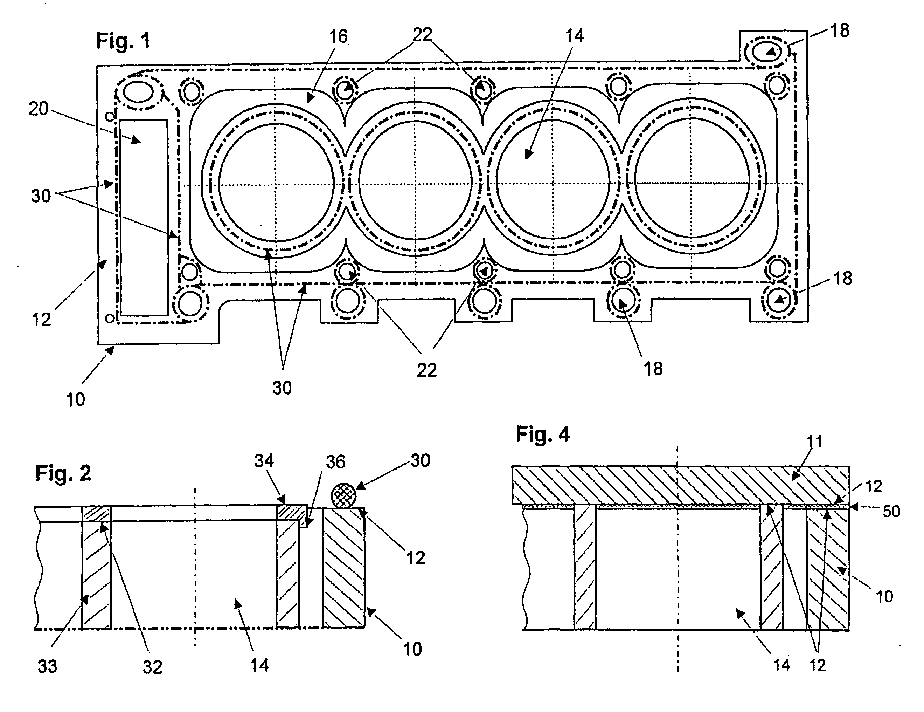

Fig. 1 zeigt von oben einen Motorblock 10, so daß nur dessen Dichtfläche 12 sichtbar ist. In der Dichtfläche 12 befinden sich Öffnungen für die Brennräume 14, die Kühlwasserkanäle 16, die Ölbohrungen 18, die Kammer 20 für die Steuerkette und die Zylinderkopfschrauben 22. Um alle diese Öffnungen herum werden Raupen 30 einer aushärtbaren Zusammensetzung aufgebracht. Die Auftragungsmenge wird so gesteuert, daß sich nach dem Aufsetzen des Zylinderkopfes und Anziehen der Zylinderkopfschrauben eine sehr dünne Klebstoff- oder Zusammensetzungsschicht bildet und nahezu ein Metall-Metall-Kontakt zwischen Motorblock 10 und Zylinderkopf besteht. Dadurch wird der Wärmeübergang zwischen diesen beiden Maschinenteilen und die Wärmeableitung verbessert.

Der Zylinderkopf wird aufgesetzt und die Zylinderkopfschrauben werden so angezogen, daß im Betriebsfall eine Flächenpressung von mindestens 2,5 MPa in den an die Brennräumen 14 angrenzenden Bereichen der Dichtfläche gewährleistet ist. In den übrigen Bereichen der Dichtfläche 12 kann abhängig von der Wahl der als Abdichtmittel eingesetzten aushärtbaren Zusammensetzung dieser Wert der Flächenpressung auch unterschritten werden.

Fig. 2 zeigt ein Ausführungsbeispiel, bei dem die Dichtfläche 12 in den Bereichen 32 um den oder die Brennräume 14 herum relativ zu den übrigen Bereichen etwas vertieft ist. Die Kammerwand 33 hat dazu eine etwas geringere Höhe als der übrige Motorblock 10. In die Vertiefung 32, d.h. auf die Oberseite der Kammerwand 33, wird ein metallener Dichtungsring 34 gelegt. Statt im Motorblock 10 kann eine entsprechende Vertiefung auch im Zylinderkopf vorgesehen werden. Es ist auch möglich, eine solche Vertiefung sowohl im Motorblock 10 als auch im Zylinderkopf vorzusehen. Die Vertiefung 32 und die Stärke des Dichtungsrings 34 sind so aufeinander abgestimmt, daß der Dichtungsring 34 gepreßt wird.

Bei Mehrzylindermotoren können die Dichtungsringe 34 für die einzelnen Zylinder eine zusammenhängende Kette bilden. Die Dichtungsringe 34 können durch Klebstoff fixiert werden. Sie können auch einen nach unten gerichteten äußeren Rand 36 aufweisen, der die Außenseite der Kammerwände 33 umfaßt und dadurch ein Verrutschen der Dichtungsringe 34 vor dem Zusammenbau verhindert.

Um die Öffnungen für die Kühlwasserkanäle 16, die Ölbohrungen 18, die Kammer 20 für die Steuerkette und die Zylinderkopfschrauben 22 herum werden Raupen 30 der aushärtbaren Zusammensetzung aufgebracht. Die Zylinderkopfschrauben werden mit dem üblichen Drehmoment angezogen.

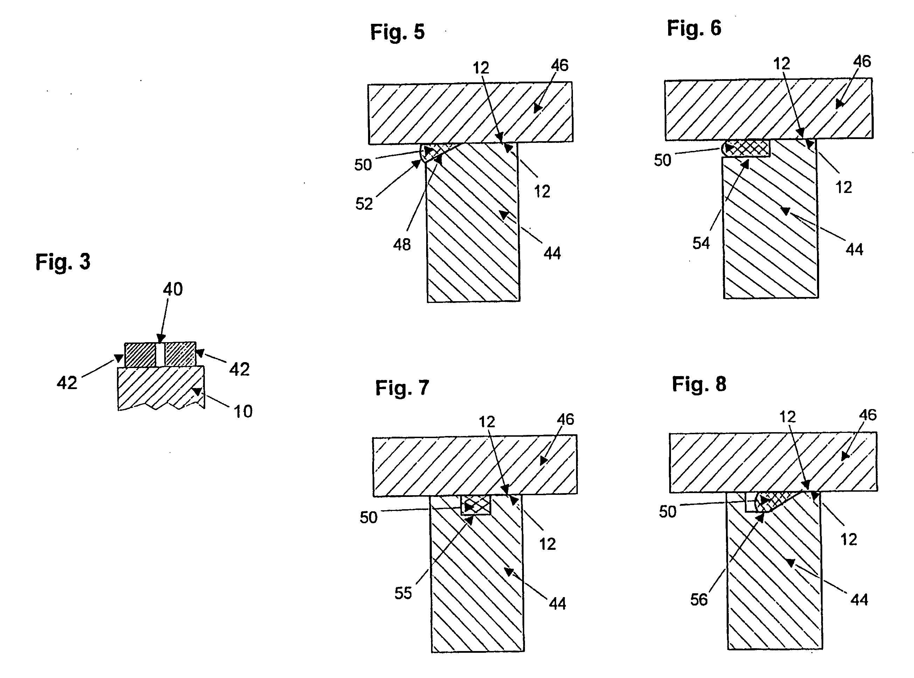

Bei dem in Fig. 3 gezeigten Ausführungsbeispiel wird um die Öffnungen für die Brennräume 14 herum ein dünner Metallring 40 gelegt, der innen und außen von Kunststoffbändern 42 eingefaßt ist. Beim Aufsetzen des Zylinderkopfes wird der dünne Metallring 40 in das Material des Motorblocks 10 und des Zylinderkopfes eingedrückt, wodurch eine zuverlässige Abdichtung um den Brennraum 14 herum erzielt wird.

Fig. 4 zeigt die Dichtflächen 12 des Motorblocks 10 und des Zylinderkopfes 11 und eine Abdichtung 50 dazwischen. Die die Brennkammer 14 umgebenden Ränder der Dichtflächen 12 sind geringfügig erhöht, so daß in diesem Bereich weitgehend Metall-Metall-Kontakt besteht. In den anderen Bereichen hat die Abdichtung 50 eine Stärke bis zu 0,8 mm.

Fig. 5 zeigt zwei Flansche 44, 46 und die Abdichtung 50 dazwischen. Die Flansche 44, 46 weisen die Dichtflächen 12 auf. Die Ränder der Dichtflächen 12 haben eine 30°-Fase 48 einer Höhe von 0,8 mm. Die Fase 48 bildet eine keilförmige Rinne, in der die aushärtbare Zusammensetzung einen konvexen Meniskus 52 bildet. Durch die Fase 48 sind die Randbereiche der Abdichtung 50 gegen Ablösen von den Dichtflächen 12 besonders geschützt. Die Abdichtung 50 hält dadurch auch Relativbewegungen der Flansche 44, 46 infolge Temperaturunterschieden oder unterschiedlicher Temperaturkoeffizienten stand.

Fig. 6 zeigt eine Anordnung ähnlich der von Fig. 5, wobei in der Dichtfläche 12 des einen Flansches 44 eine stufenförmige Ausnehmung 54 mit einer Stufenhöhe von 0,8 mm ausgebildet ist. Durch die größere Stärke der Abdichtung 50 innerhalb der Ausnehmung 54 hält die Abdichtung 50 kleineren Relativbewegungen der Flansche 44, 46 stand.

Die Figuren 7 und 8 zeigen die zwei Flansche 44, 46 mit der Abdichtung 50 dazwischen, wobei innerhalb der Dichtfläche 12 des Flansches 44 eine rechtwinklige bzw. einseitig schräge Nut 55, 56 ausgebildet ist. Die Nuten 55, 56 haben eine Tiefe von wiederum 0,8 mm, so daß die Abdichtung 50 hier eine entsprechende Stärke hat. Auch durch eine solche im Innenbereich der Dichtflächen 12 befindliche größer Schichtstärke können die Flansch 44, 46 in einer Weise abgedichtet werden, daß die Abdichtung 50 hohen Temperaturen und/oder Drücken innerhalb der angrenzenden Räume und temperaturbedingten Relativbewegungen standhält.

### Liste der Bezugszeichen

- 10: Motorblock
- 11: Zylinderkopf
- 12: Dichtfläche
- 14: Brennraum
- 16: Kühlwasserkanal
- 18: Ölbohrung
- 20: Kammer für Steuerk.
- 22: Zylinderkopfschraub.
- 30: Raupe
- 32: Vertiefung
- 33: Kammerwand
- 34: Dichtungsring
- 36: Rand
- 40: Metallring
- 42: Kunststoffbänder
- 44,46: Flansche
- 48: Fase
- 50: Abdichtung
- 52: Meniskus
- 54: Ausnehmung
- 55: rechtwinklige Nut
- 56: einseitig schräge Nut

## Patentansprüche

1. Verfahren zum Herstellen einer Abdichtung zwischen zwei Maschinenteilen (10, 11), die zusammen einen Raum (14), in dem zumindest zeitweise hoher Druck und/oder hohe Temperatur herrschen, umschließen, wobei eine aushärtbare Zusammensetzung (30) als Abdichtmittel (30) unmittelbar auf ein oder auf beide Maschinenteile (10, 11) zumindest in den Bereichen aufgetragen wird, die nicht unmittelbar an den Raum (14) angrenzenden, in dem zumindest zeitweise hoher Druck und/oder hohe Temperatur herrscht, und wobei die beiden Maschinenteile (10, 11) vor dem Aushärten der Zusammensetzung (30) verbaut werden, **dadurch gekennzeichnet,**
- **dass** die aushärtbare Zusammensetzung (30) in flüssiger Form auf ein oder auf beide Maschinenteile (10, 11) aufgetragen wird,
- **dass** unmittelbar um den Rand des Raums (14) hohen Drucks und/oder hoher Temperatur ein Dichtungsring (34) zwischen die beiden Maschinenteile (10, 11) eingebaut wird, oder dass die Dichtfläche (12) am Rand des Raumes (14) leicht erhöht ist gegenüber der restlichen Dichtfläche und die aushärtbare Zusammensetzung (30) auf die gesamte Dichtfläche (12) beider Maschinenteile (10, 11) aufgetragen wird, und
- **dass** außerhalb der Bereiche, die unmittelbar an den Raum (14) angrenzen, die aushärtbare Zusammensetzung (30) zur Abdichtung eingesetzt wird.

2. Verfahren nach Anspruch 1, **dadurch gekennzeichnet, dass** der Dichtungsring (34) in einer Vertiefung (32) einer Dichtfläche (12) der Umfangswand.der Kammer (14) eingebaut wird, wobei die Vertiefung so dimensioniert ist, dass auf den Dichtungsring (34) in zusammengebautem Zustand der beiden Maschinenteile (10, 11) der für die Abdichtung erforderliche Druck ausgeübt wird.

3. Verfahren nach Anspruch 2, **dadurch gekennzeichnet, dass** der Dichtungsring ein Metallring (40) ist, der in einen Kunststoffring eingefügt oder an ihn angefügt ist.

4. Verfahren nach einem der Ansprüche 1 bis 3, **dadurch gekennzeichnet, dass** die aushärtbare Zusammensetzung (30) auf die gesamte Dichtfläche (12) der beiden Maschinenteile (10, 11) aufgetragen wird.

5. Verfahren nach einem der Ansprüche 1 bis 4, wobei es sich bei den beiden Maschinenteilen um den Motorblock (10) und den Zylinderkopf (11) eines Kolbenmotors handelt.

6. Anordnung von zwei miteinander verbundenen Maschinenteilen (10, 11) mit einer Abdichtung dazwischen, **dadurch gekennzeichnet, dass** die Abdichtung nach dem Verfahren eines der Ansprüche 1 bis 5 hergestellt ist.

7. Kolbenmotor mit einem Motorblock (10), der einen Brennraum (14) enthält, mit einem Zylinderkopf (11) und mit einer dazwischen angeordneten Abdichtung (50), die einen Dichtungsring (34) aufweist, der unmittelbar um den Brennraum (14) herum gelegt ist, **dadurch gekennzeichnet,**
- **dass** der Dichtungsring (34) in einer Vertiefung (32) einer Dichtfläche (12) auf der Umfangswand des Brennraumes (14) eingebaut ist, wobei die Vertiefung so dimensioniert ist, dass auf den Dichtungsring (34) im zusammengebauten Zustand des Motorblocks (10) und des Zylinderkopfes (11) der für die Abdichtung erforderliche Druck ausgeübt wird, und
- **dass** die Abdichtung (50) in den Bereichen, die nicht unmittelbar an den oder die Brennräume (14) angrenzen durch eine ausgehärtete Zusammensetzung (30) gebildet wird.

8. Kolbenmotor mit einem Motorblock (10), der einen Brennraum (14) enthält, mit einem Zylinderkopf (11) und mit einer dazwischen angeordneten Abdichtung (50), **dadurch gekennzeichnet,**
- **dass** die Dichtfläche (12) am Rand des Raumes (14) leicht erhöht ist gegenüber der restlichen Dichtfläche und
- **dass** die gesamte Dichtfläche (12) beider Maschinenteile (10, 11) außerhalb der Bereiche, die unmittelbar an den Raum (14) angrenzen, mittels der ausgehärbaren Zusammensetzung (30) abgedichte sind.

## Claims

1. Process for manufacturing a seal between two machine parts (10, 11) which together enclose a space (14) in which, at least at times, high pressure and/or high temperature prevail, a curable composition (30) being applied directly as sealing means (30) onto one or both machine parts (10, 11) at least in the areas which do not directly adjoin the space (14) in which, at least at times, high pressure and/or high temperature prevails and the two machine parts (10, 11) being built in before curing of composition (30) **characterized in that**
- the curable composition (30) is applied in liquid form onto one or both machine parts (10, 11);
- a sealing ring (34) is inserted between the two machine parts (10, 11) directly around the edge of the high pressure and/or high temperature space (14) or the sealing surface (12) at the edge of the space (14) is slightly raised compared with the remaining sealing surface and the curable composition (30) is applied onto one or both machine parts (10, 11) onto the entire sealing surface (12) of the two machine parts (10, 11); and
- the curable composition (30) is used for sealing outside the areas which directly adjoin the space (14).

2. Process according to claim 1, **characterized in that** the sealing ring (34) is inserted into a recess (32) of a sealing surface (12) of the peripheral wall of the chamber (14), the recess being dimensioned such that the pressure required for the seal is exerted on the sealing ring (34) in the assembled state of the two machine parts (10, 11).

3. Process according to claim 2, **characterized in that** the sealing ring is a metal ring (40) which is inserted in a plastic ring or is attached to it.

4. Process according to one of claims 1 to 3, **characterized in that** the curable composition (30) is applied onto the entire seal surface (12) of the two machine parts (10, 11).

5. Process according to one of claims 1 to 4, the two machine parts being the engine block (10) and the cylinder head (11) of a piston engine.

6. Arrangement of two machine parts (10, 11) connected to each other and with a seal therebetween, **characterized that** the seal is produced according the process of one of claims 1 to 5.

7. Piston engine with an engine block (10) containing a combustion chamber (14), with a cylinder head (11) and with a seal (50) arranged therebetween having a sealing ring (34) laid directly around the combustion chamber (14), **characterized in that**
- the sealing ring (34) is inserted in a recess (32) of a seal surface (12) on the peripheral wall of the combustion chamber (14), the recess being dimensioned so that the pressure required for the sealing is exerted on the sealing ring (34) in the assembled state of the engine block (10) and cylinder head (11); and
- the seal (50) is formed by a cured composition in the areas which do not directly adjoin the combustion chamber or chambers (14).

8. Piston engine with an engine block (10) containing a combustion chamber (14), with a cylinder head (11) and with a seal (50) arranged therebetween, **characterized in that**
- the sealing surface (12) at the edge of the space (14) is slightly raised compared with the remaining sealing surface; and
- the entire sealing surface (12) of the two machine parts (10, 11) outside the areas which directly adjoin the space (14) is sealed by the curable composition.

## Revendications

1. Procédé de production d'une étanchéité entre deux pièces de machine (10, 11) qui délimitent ensemble un espace (14) dans lequel règne au moins en partie une pression élevée et/ou une température élevée, où l'on introduit une composition durcissable (30) comme agent d'étanchéité (30) de façon immédiate sur une pièce de machine, ou les deux (10, 11) au moins dans les zones qui n'avoisinent pas immédiatement l'espace (14) dans lequel règne au moins en partie une pression élevée et/ou une température élevée, et où les deux pièces de machine (10, 11) sont obstruées avant le durcissement de la composition (30).
**caractérisé en ce que**
- la composition durcissable (30) est déposée sous forme liquide sur une pièce de machine, ou les deux (10, 11),
- immédiatement autour du bord de l'espace ( 14) de pression et/ou de température élevée, un anneau d'étanchéité (34) est intégré entre les deux pièces de machine (10,11),
ou **en ce que**
- la surface d'étanchéité (12) au bord de l'espace (14) est légèrement accrue par rapport au reste de la surface d'étanchéité et la composition durcissable (30) est déposée sur l'ensemble de la surface d'étanchéité (12) des deux pièces de machine (10, 11), et
- en-dehors des zones qui avoisinent immédiatement l'espace (14) la composition durcissable (30) est utilisée pour l'étanchéité.

2. Procédé selon la revendication 1, **caractérisé en ce que** l'anneau d'étanchéité (34) est intégré dans un évidement (32) d'une surface d'étanchéité (12) de la paroi entourant la chambre (14), l'évidement étant dimensionné de manière que sur l'anneau d'étanchéité (34) à l'état d'assemblage des deux pièces de machine (10, 11) la pression nécessaire pour l'étanchéité soit exercée.

3. Procédé selon la revendication 2, **caractérisé en ce que** l'anneau d'étanchéité est un anneau métallique (40) qui est inséré dans un anneau de matière synthétique ou qui y est joint.

4. Procédé selon l'une des revendications 1 à 3, **caractérisé en ce que** la composition durcissable (30) est déposée sur la totalité de la surface d'étanchéité (12) des deux pièces de machine (10, 11).

5. Procédé selon l'une des revendications 1 à 4, dans lequel il s'agit, pour ce qui est des deux pièces de machine, du bloc des cylindres (10) et de la culasse (11) d'une moteur à piston.

6. Disposition de deux pièces de machine reliées l'une à l'autre (10, 11) avec une étanchéité entre elles, **caractérisée en ce que** l'étanchéité est produite selon le procédé d'une des revendications 1 à 5.

7. Moteur à piston avec un bloc de cylindres (10), qui contient une chambre de combustion (14), avec une culasse (11) et une étanchéité (50) disposée entre elles, qui présente un anneau d'étanchéité (34), lequel est disposé immédiatement autour de la chambre de combustion (14), **caractérisé en ce que**
- l'anneau d'étanchéité (34) est intégré dans un évidement (32) d'une surface d'étanchéité (12) sur la paroi environnant la chambre de combustion (14), l'évidement étant dimensionné de manière que la pression nécessaire pour l'étanchéité soit exercée sur l'anneau d'étanchéité (34) dans l'état d'assemblage du bloc des cylindres (10) et de la culasse (11), et
- l'étanchéité (50) soit formée, dans les zones qui n'avoisinent pas immédiatement la ou les chambres de combustion ( 14), par une composition durcie (30).

8. Moteur à piston avec un bloc de cylindres ( 10) qui contient une chambre de combustion (14), avec une culasse (11), et avec une étanchéité (50) disposée entre elles, **caractérisé en ce que**
- la surface d'étanchéité (12) au bord de l'espace (14) est légèrement accrue par rapport au reste de la surface d'étanchéité et
- l'ensemble de la surface d'étanchéité (12) des deux pièces de machine (10, 11), en-dehors des zones qui voisinent immédiatement l'espace (14) est étanchéifiée au moyen de la composition durcie (30).
